# EUROPEAN PATENT APPLICATION

(11) **EP 1 416 395 A2**
(43) Date of publication of application: **06.05.2004**
(21) Application number: 03360121.2
(22) Date of filing: 21.10.2003
(51) Int. Cl.: G06F 17/21

(54) **Method and system for preparing a document model**

(30) Priority: 22.10.2002 FR 0213142
(71) Applicant: Société Civile Xeolia, 67000 Strasbourg (FR)
(72) Inventor: Roudot, Denis, 67000 Strasbourg (FR)
(74) Representative: Nuss, Pierre

(57) **Abrégé**

La présente invention a pour objet un procédé pour la constitution d'une maquette d'édition composée d'au moins une fiche au niveau de laquelle figure au moins un élément visuel, les informations relatives à ladite maquette étant stockées dans une base de données dans des champs identifiés reliés entre eux par des liens, une représentation visuelle conforme à la réalité d'au moins une partie de ladite maquette d'édition pouvant être affichée par l'intermédiaire d'au moins un moyen de visualisation.

Procédé caractérisé en ce qu'il consiste à réaliser ledit au moins un affichage d'une représentation visuelle sous la forme d'un affichage dynamique et interactif autorisant une modification par un intervenant ou utilisateur de la représentation visuelle de la maquette ou partie de maquette et en ce qu'il consiste à réaliser un asservissement entre ledit au moins un moyen de visualisation (9, 10) et la base de données (8).

## Description

La présente invention a trait à un procédé pour la constitution d'une maquette d'édition composée d'au moins une fiche au niveau de laquelle figure au moins un élément, ainsi qu'un système pour la mise en oeuvre de ce procédé.

Cette invention concerne le domaine de l'édition et trouvera une application particulière lorsqu'il s'agit d'assurer la réalisation d'une maquette sur la base de laquelle il est réalisé l'impression d'un document, notamment un catalogue, un tract publicitaire ou analogue.

L'on connaît, d'ores et déjà, des procédés permettant la réalisation d'une telle maquette et faisant appel, pour sa mise en oeuvre, à des moyens informatiques puissants et sophistiqués tels que la PAO mettant en oeuvre des logiciels spécifiques comme par exemple celui connu sous la désignation "X-Press".

De tels moyens autorisent, certes, une certaine souplesse dans le processus de réalisation d'une maquette mais leur utilisation présente, cependant, de nombreux inconvénients.

Ainsi, lorsqu'on souhaite apporter une modification à la maquette, il est souvent indispensable de reprendre intégralement le processus de conception de cette maquette. De plus, une telle modification est, usuellement, apportée en appliquant une méthode de type copier/coller qui présente l'inconvénient de multiplier les risques d'erreurs.

On observera, encore, que la fiche d'une maquette comporte, usuellement, des éléments qui, pour une meilleure compréhension, sont hiérarchisés et auxquels est attribué un numéro permettant, par exemple et pour un consommateur, de se reporter à des commentaires ou à des indications complémentaires concernant cet élément et figurant, notamment au niveau de cette fiche, par exemple au niveau d'un autre élément.

Dans un pareil cas, lorsqu'on procède à la suppression d'un élément, il est indispensable de modifier en conséquence la hiérarchie, la numérotation des autres éléments ainsi qu'éventuellement les commentaires/indications relatifs à cet élément. Une telle modification doit être opérée de manière manuelle et se révèle être fastidieuse et sources d'erreurs en raison de la multiplication des modifications à effectuer, ceci, essentiellement, en raison du fait de l'absence de liens entre les différents éléments.

Une telle absence de liens entre deux éléments (par exemple la reproduction d'un objet, d'une part, et son prix, d'autre part) entraîne qu'une modification de la taille et/ou de la disposition d'un élément (notamment la reproduction) oblige systématiquement à une intervention supplémentaire consistant à modifier l'autre élément.

De plus, on remarquera que lorsqu'on réalise une fiche, il est indispensable de prévoir un espace suffisant pour assurer la visualisation d'un élément, notamment constitué par une photographie. Aussi et afin d'assurer une visualisation de cet élément dans des conditions satisfaisantes pour un observateur, il est nécessaire d'adapter la dimension de cet élément par rapport à l'espace prévu, ce qui consiste en une première manipulation. En outre et lorsqu'on souhaite modifier la dimension dudit élément et/ou de l'espace, il est indispensable de procéder à au moins une nouvelle manipulation consistant à modifier cet élément ou cet espace.

Selon un autre inconvénient, il n'est aucunement prévu de visualiser une modification apportée à un élément d'une fiche ce qui génère une incertitude et peut être à l'origine d'incompréhensions préjudiciables au bon déroulement de la conception d'une maquette. De plus, cette absence de visualisation d'une modification engendre, pour un décideur, des difficultés pour valider ou non une modification déterminée.

En outre, les modifications apportées par un opérateur à une fiche sont accessibles après un délai plus ou moins long mais aucunement en temps réel, de sorte que le temps de réponse d'autres intervenants à une telle modification ainsi que la durée de conception d'une maquette se trouvent notablement rallongés.

La présente invention a pour but de remédier au moins à certains des inconvénients susmentionnés en proposant un nouveau procédé pour la constitution d'une maquette d'édition, ainsi qu'un système pour sa mise en oeuvre.

A cet effet, la présente invention concerne un procédé pour la constitution d'une maquette d'édition composée d'au moins une fiche au niveau de laquelle figure au moins un élément visuel, les informations relatives à la structure, à l'arrangement et au contenu de ladite maquette étant stockées dans une base de données dans des champs identifiés reliés entre eux par des liens, ces informations comprenant des informations concernant les contenus desdits éléments visuels, stockées dans un premier ensemble de champs, et des informations concernant la disposition et la présentation desdits éléments visuels et la structure des fiches et de la maquette elle-même, stockées dans un second ensemble de champs, une représentation visuelle conforme à la réalité d'au moins une partie de ladite maquette d'édition pouvant être affichée par l'intermédiaire d'au moins un moyen de visualisation, procédé caractérisé en ce qu'il consiste à réaliser ledit au moins un affichage d'une représentation visuelle sous la forme d'un affichage dynamique et interactif autorisant une modification par un intervenant ou utilisateur de la représentation visuelle de la maquette ou partie de maquette et en ce qu'il consiste à réaliser un asservissement entre ledit au moins un moyen de visualisation et la base de données de telle manière que toute modification de la maquette considérée intervenant au niveau de sa ou de l'une de ses représentation(s) visuelle(s) est automatiquement transposée au niveau de la base de données et que toute modification de la maquette considérée intervenant au niveau de la base de données est automatiquement affichée au niveau de ladite au moins une représentation visuelle.

L'invention concerne également un système pour la mise en oeuvre du procédé précité, principalement constitué par une base de données stockant les informations relatives à la structure, à l'arrangement et au contenu d'une maquette d'édition dans des champs identifiés reliés entre eux par des liens correspondants, et par au moins un moyen de visualisation apte à afficher une représentation visuelle conforme à la réalité d'au moins une partie de ladite maquette d'édition composée d'au moins une fiche au niveau de laquelle figure au moins un élément visuel, système caractérisé en ce que ledit au moins un moyen de visualisation réalise un affichage dynamique et interactif autorisant une modification par un intervenant ou utilisateur de la représentation visuelle de la marquette ou partie de maquette et en ce qu'il comporte un asservissement entre ledit au moins un moyen de visualisation et la base de données de telle manière que toute modification de la maquette considérée intervenant au niveau de sa ou de l'une de ses représentation(s) visuelle(s) est automatiquement transposée au niveau de la base de données et que toute modification de la maquette considérée intervenant au niveau de la base de données est automatiquement affichée au niveau de ladite au moins une représentation visuelle.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
- la figure 1 est une représentation schématisée de deux fiches d'une maquette d'édition ;
- la figure 2 est une vue schématisée et en détail d'une fiche représentée figure 1, et,
- la figure 3 est une représentation schématisée des principaux composants d'un système pour la mise en oeuvre du procédé selon l'invention.

La présente invention concerne le domaine de l'édition et trouvera une application particulière lorsqu'il s'agit d'assurer la réalisation d'une maquette sur la base de laquelle il est réalisé l'impression d'un document, notamment un catalogue, un tract publicitaire ou analogue.

En fait et de manière connue en soi, un tel document se présente généralement sous la forme d'au moins une feuille, définie par deux pages (constituant le recto et le verso de la feuille), et comportant au niveau de l'une au moins de ces pages (recto, voire encore verso d'une telle feuille) au moins une information constituée par au moins un élément.

Afin de réaliser l'impression d'un tel document, il est, au préalable, nécessaire de procéder à la constitution d'une maquette d'édition 1 composée d'au moins une fiche 2, 2' au niveau de laquelle figure au moins un élément 3, 4 ; 3', 4'. Une telle fiche 2, 2' correspond, de préférence, à une page d'une feuille d'un document tel que susmentionné.

Dans ce contexte en particulier, mais non limitativement, l'invention concerne un procédé pour la constitution d'une maquette d'édition 1 composée d'au moins une fiche 2 au niveau de laquelle figure au moins un élément visuel 3, 4, les informations relatives à la structure, à l'arrangement et au contenu de ladite maquette 1 étant stockées dans une base de données 8 dans des champs identifiés reliés entre eux par des liens.

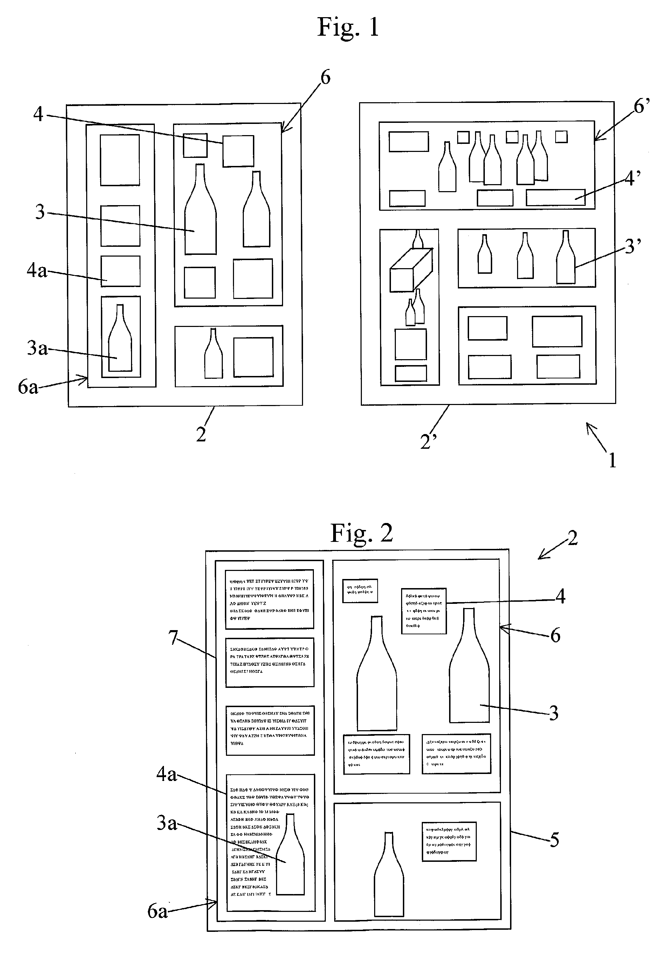

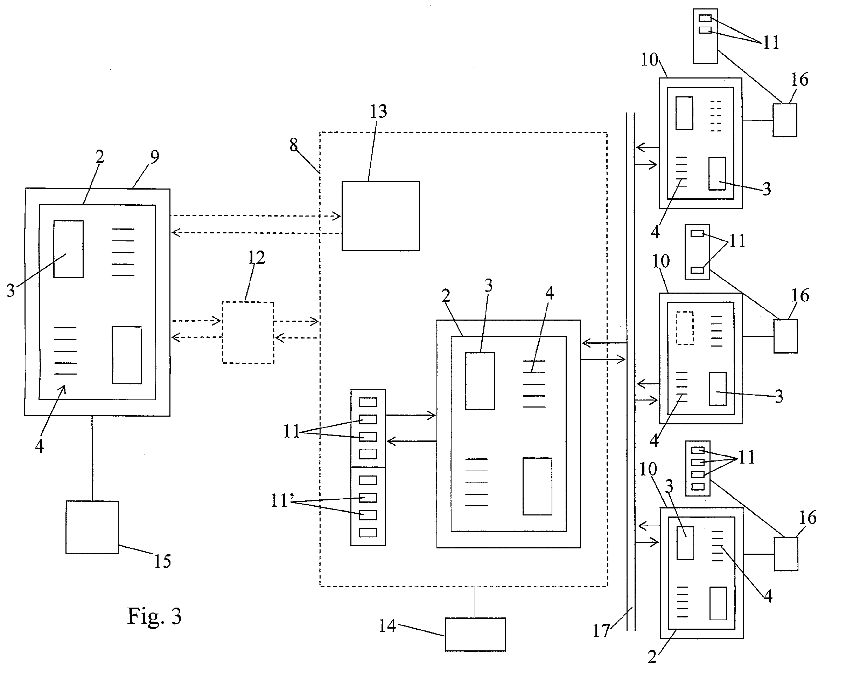

Ces informations comprennent des informations concernant les contenus desdits éléments visuels 3, 4, stockées dans un premier ensemble de champs 11, et des informations concernant la forme, la disposition et la présentation desdits éléments visuels et la structure des fiches 2 et de la maquette 1 elle-même, stockées dans un second ensemble de champs 11', une représentation visuelle conforme à la réalité d'au moins une partie de ladite maquette d'édition 1 (par exemple plusieurs fiches 2, 2' qui se suivent ou non) pouvant être affichée par l'intermédiaire d'au moins un moyen de visualisation 9, 10 (voir figures 1 et 3).

Autrement dit, la base de données 8 renferme essentiellement deux types d'informations ou données, à savoir, d'une part, des informations ou données relatives aux contenus effectifs des éléments 3, 4 (champs 11) et, d'autre part, des informations relatives à la présentation, à la disposition et à l'arrangement desdits contenus desdits éléments 3, 4 dans la maquette d'édition 1 et les fiches 2 composant cette dernière (champs 11'), ces champs 11, 11' étant liés les uns aux autres de manière structuré. De plus, ces champs sont parfaitement localisés dans la base de données 8, peuvent être interprétés par le système et sont manipulables séparément.

Conformément à l'invention, ledit procédé consiste à réaliser ledit au moins un affichage d'une représentation visuelle sous la forme d'un affichage dynamique et interactif autorisant une modification par un intervenant ou utilisateur de la représentation visuelle de la maquette 1 ou partie de maquette 1. Il consiste également à réaliser un asservissement (ou une relation d'évolution parallèle forcée) entre ledit au moins un moyen de visualisation 9, 10 et la base de données 8 de telle manière que toute modification de la maquette 1 considérée intervenant au niveau de sa ou de l'une de ses représentation(s) visuelle(s) est automatiquement transposée au niveau de la base de données 8 et que toute modification de la maquette 1 considérée intervenant au niveau de la base de données 8 est automatiquement affichée au niveau de ladite au moins une représentation visuelle.

Une telle modification pourra selon le cas affecter un seul ou plusieurs éléments 3, 4, une ou plusieurs fiches 2 ou toute la maquette 1 dans son ensemble.

Sur la figure 3 sont représentés symboliquement, dans la base de données 8, la représentation visuelle d'une fiche 2 et sa déclinaison en termes de champs 11 et 11', cette représentation étant à titre d'exemple affichée en totalité ou en partie sur des moyens de visualisation 9 et 10.

En accord avec une première caractéristique de l'invention, la ou une représentation visuelle d'une fiche 2, d'une partie de la maquette d'édition 1 (plusieurs fiches 2) ou de la totalité de cette dernière, est produite au niveau d'un moyen de visualisation 9 correspondant par exploitation d'un fichier 12 produit, et éventuellement rafraîchi à intervalles réguliers et/ou sur action d'un intervenant, à partir des informations correspondantes issues de la base de données 8 et apte à être interprétées par ledit moyen de visualisation 9, toute modification de ladite représentation visuelle étant répercutée automatiquement dans ledit fichier 12, puis dans ladite base de données 8, sensiblement en temps réel ou de manière différée.

En variante, il peut également être prévu que la représentation visuelle au niveau du moyen 9 soit produite par transcodage 13 des informations correspondantes de la base de données 8, toute modification de ladite représentation visuelle étant répercutée automatiquement, et avantageusement en temps réel, directement dans ladite base de données 8 par l'intermédiaire d'un transcodeur 13 adapté (voir figure 3). Ce transcodeur 13 traduit les informations contenues dans les champs de la base de données 8 en informations visuelles sous forme de pages d'écran au niveau du moyen de visualisation 9, et inversement.

En accord avec une deuxième caractéristique de l'invention, constituant une alternative ou une addition à la première caractéristique précitée, la ou une représentation visuelle d'une ou de plusieurs fiches 2, d'une partie de la maquette d'édition 1 (plusieurs fiches) ou de la totalité de cette dernière, est produite au niveau d'au moins un moyen de visualisation 10 associé à la base de données 8 et exploitant en vue de cet affichage directement les informations correspondantes issues de ladite base de données 8, toute modification de ladite représentation visuelle étant répercutée automatiquement et en temps réel en tant que modification correspondante des informations concernées stockées au niveau de la base de données 8, et vice-versa.

Selon un mode de réalisation préféré de l'invention, autorisant un partage de la représentation visuelle entre plusieurs utilisateurs et des interventions simultanées de plusieurs intervenants parmi ces utilisateurs sur cette représentation, le procédé peut prévoir d'afficher une même représentation visuelle sur au moins deux moyens de visualisation 10 sous forme d'interfaces graphiques, reliés entre eux et à la base de données 8 par un réseau 17 adapté et associé chacun à une interface de commande 16 susceptible de permettre de modifier la représentation visuelle, l'affichage de ladite représentation visuelle étant éventuellement tronqué sur certains des moyens de visualisation 10 et les possibilités de modifications étant éventuellement limitées ou absentes au niveau d'une ou de plusieurs interface(s) de commande 16, en fonction de la qualité de l'utilisateur concerné et des autorisations affectées à ce dernier.

Comme cela ressort symboliquement de la figure 3 des dessins annexés, les moyens de visualisation 10 pourront également permettre d'afficher, en alternative à une ou plusieurs fiches 2, ou en surimposition, des données ou informations directement issues des champs 11, l'affichage de ces données ou informations pouvant être différent (informations cachées ou tronquées) en fonction de la qualité et des autorisations de l'utilisateur du moyen de visualisation 10 concerné.

Selon une variante de réalisation avantageuse de l'invention, ressortant également de la figure 3 annexée, le procédé peut consister à afficher une même représentation visuelle sur au moins deux moyens de visualisation 9 et 10 différents, dont au moins l'un 9 interprète un fichier 12 produit à partir d'informations issues de la base de données 8 ou est relié à un transcodeur 13 adapté associé ou intégré dans ladite base 8 et dont au moins un autre 10, sous la forme d'une interface graphique, exploite directement lesdites informations issues de la base de données 8, une modification de ladite représentation visuelle intervenant sur l'un des moyens de visualisation 9, 10 étant automatiquement, et sensiblement en temps réel, répercutée au niveau de l'autre ou des autres moyen(s) de visualisation 10, 9.

Bien entendu, l'affichage de la représentation visuelle de l'état courant de la maquette 1 ou de la partie de maquette 1 (une ou plusieurs fiches 2) pourra s'effectuer sur différents moyens de visualisation 9 et 10 simultanément ou de manière différée. Un affichage simultané sur différents moyens 9, sur différents moyens 10 ou sur différents moyens 9 et 10 permettra à plusieurs intervenants de modifier la représentation visuelle, cette modification étant simultanément soumise aux autres intervenants, et/ou à des décideurs et/ou conseillers.

Afin de prendre en compte les conséquences de la modification d'un élément sur un ou plusieurs autres éléments, et de répercuter automatiquement les modifications affectant un élément donné au niveau d'un ou de plusieurs éléments liés ou non audit élément donné, le procédé peut avantageusement consister, pour une maquette d'édition 1 donnée, à réaliser ou à mettre en oeuvre un asservissement de nature relationnelle, structurelle, spatiale et/ou dimensionnelle, entre au moins deux éléments 3, 3a, 4, 4a ; 3', 4' d'une même fiche 2 ou d'au moins deux fiches 2, 2' différentes de cette maquette 1, ledit asservissement étant préférentiellement soumis à des règles prédéfinies et à la prise en compte de critères graphiques.

Ces règles pourront par exemple dépendre de la nature du document à éditer, de standards de présentation imposés ou du modèle choisi pour les fiches 2.

En ce qui concerne les critères susceptibles d'être pris en compte, on peut notamment citer le critère d'impact (place hiérarchique que doit prendre un groupe visuel), le critère de position (force d'un espace par rapport à un autre) ou analogue.

Préférentiellement, il peut être prévu d'assurer un asservissement en temps réel et réciproque entre tous les éléments 3, 4, 3a, 4a, 3', 4' de toutes les fiches 2, 2' constituant la maquette d'édition 1.

Le procédé consiste avantageusement également à définir au niveau de chaque fiche 2, 2' au moins un contenant 6, 6a, 6' dans lequel est contenu un élément 3, 4, 3a, 4a ; 3', 4' ou un groupe d'éléments 3, 4, 3a, 4a ; 3', 4', les contenants 6, 6a ; 6' d'une même fiche 2, 2' ou d'au moins deux fiches 2 et 2' différents étant asservis entre eux.

La constitution d'une maquette d'édition 1 débute par une première phase opératoire de création, laquelle est généralement suivie d'une ou de plusieurs phases de modifications sous l'influence de différents intervenants, ces modifications pouvant constituer en des corrections, des retouches, des mises à jour des éléments ou de leur disposition, des ajouts, des déplacements, des réarrangements ou analogues.

Dans le cadre de la première phase de création, le procédé peut consister, en vue d'une première constitution d'une maquette d'édition 1 donnée, à réaliser les opérations suivantes :
a) affecter à tout ou partie des éléments 3, 4, 3a, 4a ; 3', 4' de la base de données 8 des paramètres permettant d'en assurer une sélection automatique et/ou manuelle.
b) sélectionner, dans la base de données 8, par l'intermédiaire de moyens automatiques et/ou manuels, des éléments 3, 4, 3a, 4a ; 3', 4' destinés à entrer dans la composition d'une fiche 2, 2' de la maquette 1 ;
c) sélectionner et/ou définir un modèle 5 correspondant à ladite fiche 2, 2' ;
d) sélectionner l'ordre d'implantation et les localisations desdits éléments 3, 4, 3a, 4a ; 3', 4' sur ladite fiche 2, 2' ;
e) répéter les opérations b) à d) pour chaque fiche 2, 2'
f) assurer une édition d'au moins une fiche 2, 2', d'une partie de la maquette (1) ou de la maquette (1) entière, sur un moyen de visualisation 9, 10 ou autre.

Les mêmes opérations sont répétées pour toutes les autres fiches de la maquette 1, avec d'autres éléments visuels.

Ainsi, le procédé consiste au début à sélectionner un certain nombre d'éléments destinés à figurer au niveau d'une fiche 2, 2'.

A ce propos, on observera qu'un tel élément 3, 4 peut, en fait, être défini par un bloc image 3 correspondant à la représentation d'un objet et au niveau duquel peut être assurée une telle représentation (par exemple une photographie ou un dessin).

Un tel élément 3, 4 peut, encore, être défini par un bloc texte 4 correspondant à la représentation d'un texte et au niveau duquel peut être assurée une telle représentation.

Par ailleurs, le procédé selon l'invention peut prévoir une programmation et une modification, non seulement d'un modèle 5 pour éventuelle chaque fiche de la maquette, mais également de la structure générale de cette dernière, ainsi que des composants de chaque fiche.

A cet effet, les champs comprenant, pour une maquette d'édition 1 donnée, les informations de paramétrage de la disposition, la présentation, l'arrangement et la structure des éléments visuels 3, 4, 3a, 4a ; 3', 4', des fiches 2, 2' et de ladite maquette 1 sont adaptés pour être programmés et modifiés par une interface de commande et de programmation adéquate 14 associée à la base de données 8, lesdits champs étant structurés hiérarchiquement en champs de paramétrage respectivement de la maquette d'édition 1 dans son ensemble, de chaque fiche 2, 2', du ou des groupes d'éléments 3, 4, 3a, 4a ; 3', 4' de chaque fiche 2, 2', du ou des éléments de chaque groupe et du contenu de chaque élément.

En cas de modification d'un paramétrage par ladite interface 14, cette modification affectera ainsi simultanément toute la maquette 1, toutes les fiches, tous les contenants, tous les éléments et tous les contenus des éléments.

Le moyen de visualisation 9 pourra également comporter une interface de commande associée 15. De plus, toute modification effectuée au niveau de la représentation visuelle présente sur ledit moyen 9, ou éventuellement uniquement des modifications affectant les éléments visuels, certains de ces derniers ou leurs contenus, sera signalée au niveau de la base de données et nécessitera une validation à ce niveau pour être effective et enregistrée, chaque modification n'affectant que le champ ou la partie de champ effectivement concernée par cette dernière.

En outre, le procédé peut également prévoir que toute modification puisse être annulée (retour à l'état avant modification).

Dans le but d'illustrer la présente invention, on se réfèrera, dans la suite de la description, à un exemple de maquette d'édition 1 (représentée partiellement figure 1) correspondant à un catalogue de présentation de bouteilles de vins constituant un exemple non limitatif d'application de la présente invention.

Dans un pareil cas, un bloc image 3 peut être constitué par la représentation d'une bouteille ou d'un groupe de bouteilles de vin alors qu'un bloc texte 4 peut être constitué par des informations relatives à cette ou ces bouteilles et correspondant à ladite représentation. Ainsi, de telles informations peuvent, par exemple, être relatives à la nature, à la provenance, au millésime du vin contenu dans une telle bouteille, au conditionnement de ces bouteilles, à la quantité disponible, au prix, etc.

En fait, de tels éléments visuels (bloc image 3, bloc texte 4) ont, au préalable, été enregistrés dans une base de données par un protocole approprié et, lors de la constitution d'une maquette 1, ces éléments 3, 4 sont sélectionnés, au niveau de ladite base de données, ceci par l'intermédiaire de moyens manuels et/ou automatiques.

A ce propos et pour ce faire, le procédé selon l'invention peut, encore, consister en ce qu'on affecte à tout ou partie des éléments 3, 4 de ladite base de données des paramètres permettant d'en assurer une sélection automatique et/ou manuelle.

En fait, il est possible de définir de tels paramètres de sélection comme étant, par exemple, la quantité de bouteilles en stock, la quantité de bouteilles susceptible d'être livrée par le producteur, la marge effectuée sur une bouteille ou sur un carton de bouteilles, la marque, la provenance du vin, le cépage, la quantité de bouteilles vendues les années précédentes, les ristournes consenties par le producteur, le rapport qualité/prix d'un produit, etc.

Une telle affectation fait que le procédé selon l'invention constitue un outil d'aide à la décision automatique et/ou manuel pour la réalisation d'une maquette 1 en fonction de certains critères (paramètres) pré-établis. Il est évident que le procédé peut, encore, prévoir une sélection croisée de plusieurs paramètres pour une réalisation affinée d'une telle maquette 1.

A ce propos, on observera que le procédé peut, avantageusement, être conçu pour, au cours d'un processus de création d'une telle maquette 1, proposer, automatiquement, un certain nombre de paramètres de sélection.

Une autre caractéristique du procédé consiste en ce que les éléments 3, 4 sélectionnés sont destinés à figurer au niveau d'au moins une fiche 2, 2' de la maquette 1.

Pour ce faire, le procédé consiste en ce que l'on établit un modèle 5 correspondant à une telle fiche 2 et au niveau duquel vont figurer ces éléments 3, 4.

Afin d'établir un tel modèle 5, le procédé selon l'invention consiste à sélectionner (notamment dans une base de données, par exemple celle contenant lesdits éléments 3, 4 susmentionnés) et/ou à définir (notamment par construction de toutes pièces) un modèle 5 correspondant à une telle fiche 2.

A ce propos et tel que visible figure 2, un tel modèle 5 de fiche 2 comporte au moins un contenant 6, 6a destiné à contenir au moins un élément 3, 4 ; 3a, 4a du type susmentionné, ceci en vue de la visualisation, au niveau de l'emplacement occupé par ce contenant 6, desdits éléments 3, 4 ; 3a, 4a, d'une part, sur la fiche 2 de la maquette 1 et, d'autre part, sur le document imprimé sur la base de cette maquette 1.

On observera qu'un tel contenant 6, 6a peut être enregistré au niveau d'une mémoire (notamment au niveau d'une base de données 8, plus particulièrement celle au niveau de laquelle sont enregistrés lesdits éléments 3, 4) et peut être matérialisé par un cadre 7 au niveau de ladite fiche 2.

C'est, plus particulièrement, à une telle fiche 2 qu'on associe au moins un tel contenant 6, 6a ainsi qu'au moins un élément 3, 4 ; 3a, 4a contenu dans un tel contenant 6 ; 6a, un tel élément 3, 4 étant, par ailleurs, également associé à au moins un tel contenant 6.

Selon une autre caractéristique de l'invention, il peut être enregistré, au niveau d'une mémoire, un certain nombre de modèles de contenants 6, 6a, 6' auxquels peuvent être affectés des paramètres permettant d'en assurer une sélection automatique et/ou manuelle.

Ainsi, on observera qu'une telle sélection peut se faire de manière automatique, notamment en fonction d'une sélection, préalablement effectuée, des éléments 3, 4 et/ou des paramètres de ces éléments 3, 4. Le procédé peut, alors, consister en ce que l'on soumet à validation la sélection automatique pour, le cas échéant, proposer une autre sélection.

Bien entendu, le procédé peut encore autoriser une sélection manuelle d'un tel contenant 6 lors de la constitution d'une maquette d'édition 1.

Après avoir établi le modèle 5 d'au moins une fiche 2, 2', le procédé consiste à implanter les éléments 3, 4 ; 3a, 4a ; 3', 4' sélectionnés au niveau de cette ou de ces fiches 2, 2', plus particulièrement au niveau d'au moins un contenant 6, 6a ; 6' que comporte une telle fiche 2, 2'.

En fait, lorsqu'on implante ces éléments 3, 4, le procédé consiste à sélectionner l'ordre d'implantation de ces éléments 3, 4 sur ladite fiche 2 et, notamment, par rapport à un ou plusieurs contenants 6, 6a.

A ce propos, on observera que, selon une autre caractéristique de l'invention, tout ou partie de ces éléments 3, 4 peuvent être caractérisés par un identifiant associé à un tel élément 3, 4 (notamment au niveau d'une base de données au niveau de laquelle ledit identifiant et l'élément 3, 4 correspondant sont enregistrés), un tel identifiant étant, plus particulièrement, caractéristique de l'ordre d'implantation de cet élément 3, 4 sur la fiche 2.

Finalement, le procédé consiste en ce que, pendant ou après l'implantation de ces différents éléments 3, 4 au niveau de ladite fiche 2, l'on assure une édition de cette fiche 2. Une telle édition est réalisée, plus particulièrement, au niveau d'un écran, notamment celui d'un dispositif informatique apte à gérer et à piloter le procédé selon l'invention.

Selon une autre caractéristique de la présente invention, on associe à une fiche 2 au moins un contenant 6 ; 6a ainsi qu'au moins un élément 3, 4 ; 3a, 4a contenu dans un tel contenant 6, 6a et on assure éventuellement un asservissement en position et/ou en taille du ou des éléments 3, 4 ; 3a, 4a d'au moins un contenant 6 ; 6a à un ou plusieurs autres éléments 4, 3 ; 4a, 3a de ce contenant 6 ou d'au moins un autre contenant 6a.

A ce propos, on observera qu'un mode particulier de réalisation consiste en ce que l'on assure un asservissement en position et/ou en taille d'un élément 3 (par exemple constitué par l'image d'une bouteille) d'un contenant 6 à un autre élément 4 (par exemple constitué par le prix de cette bouteille) de ce contenant 6.

En fait, un tel asservissement peut être conçu en sorte que lorsqu'on agit sur un élément 3 du contenu d'un contenant 6, il s'ensuit un asservissement en position et/ou en taille du ou des autres éléments 4 de ce ou des autres contenants 6, 6a.

Un tel asservissement peut, encore, être conçu en sorte que lorsqu'on agit sur la taille d'un contenant 6 auquel est asservi au moins un élément 3 du contenu de ce contenant 6, il s'ensuit un asservissement en position et/ou en taille du ou des autres éléments 4 de ce contenant 6.

Selon une autre caractéristique de l'invention, on assure éventuellement un asservissement en position et/ou en taille de tout ou partie des éléments 3, 4 et/ou de tout ou partie des contenants 6, 6a d'une fiche 2 par rapport à tout ou partie des éléments 3', 4' et/ou tout ou partie des contenants 6' d'une autre fiche 2' de la maquette 1.

Un tel mode de réalisation permet, avantageusement, lorsqu'on agit sur un élément 3, 4 et/ou sur un contenant 6 d'une fiche 2 de faire en sorte qu'il se produit, automatiquement, un asservissement en taille et/ou en position d'un élément 3', 4' et/ou d'un contenant 6' de l'autre fiche 2'.

A ce propos, on observera qu'un tel mode de réalisation permet, par exemple, lorsqu'un élément 3 d'une première fiche 2 est supprimé ou modifié, d'assurer un déplacement ou une modification d'un élément 3', 4' d'une seconde fiche 2', notamment en assurant son transfert au niveau de la première fiche 2.

Une caractéristique additionnelle du procédé consiste en ce que l'on autorise la sélection de l'asservissement en taille et/ou en position, d'au moins un élément 3, 4 contenu dans au moins un contenant 6 par rapport à au moins un autre élément 4, 3 (notamment contenu dans ce contenant 6 ou dans un autre contenant 6a) et/ou par rapport à au moins un contenant 6, 6a (notamment le contenant 6 au niveau duquel ledit élément asservi est contenu, ou encore un autre contenant 6a).

Une telle caractéristique autorise ou non l'activation d'un tel asservissement.

Encore une autre caractéristique concerne le fait que le procédé consiste en ce que l'on assure éventuellement un asservissement du contenu de tout ou partie des éléments 3, 4 ; 3a, 4a d'au moins un contenant 6 ; 6a ; 6' au contenu de tout ou partie des autres éléments 4, 3 ; 4a, 3a de ce contenant 6 ou d'au moins un autre contenant 6a ; 6', figurant notamment au niveau d'une même fiche 2 ou d'une autre fiche 2'.

Un tel mode de réalisation permet, lorsque l'on procède à une modification du contenu d'un élément 3, 4 d'un contenant 6 de reporter, de manière automatique, cette modification au niveau d'un autre élément 4, 3 de ce contenant 6 ou d'un autre contenant 6a, 6'.

A titre d'exemple, un tel mode de réalisation permet de reporter au niveau de plusieurs éléments 4, 4a de différents contenants 6, 6a une information concernant la nature du conditionnement de bouteilles, une offre promotionnelle ou encore une mention légale (par exemple un avertissement relatif aux risques liés à une consommation abusive d'alcool).

Une caractéristique additionnelle du procédé consiste en ce que l'on autorise la sélection de l'asservissement du contenu d'au moins un élément 3, 4 contenu dans au moins un contenant 6 par rapport à au moins un autre élément 4, 3 (notamment contenu dans ce contenant 6 ou dans un autre contenant 6a) et/ou par rapport à au moins un contenant 6, 6a (notamment le contenant 6 au niveau duquel ledit élément asservi est contenu, ou encore un autre contenant 6a).

Une telle caractéristique autorise ou non l'activation d'un tel asservissement.

Selon une autre caractéristique de l'invention, le procédé consiste en ce que l'on définit une hiérarchie entre tout ou partie des éléments 3, 4 ; 3a, 4a ; 3', 4' d'un ou plusieurs contenants 6 ; 6a ; 6' d'une ou plusieurs fiches 2 ; 2' et on assure un asservissement de hiérarchisation de tout ou partie de ces éléments entre eux 3, 4 ; 3a, 4a ; 3', 4' en sorte que lorsqu'on agit sur un tel élément 3, 4 il s'ensuit une modification de l'ordre hiérarchique des autres éléments 3a, 4a ; 3', 4'.

Un mode particulier de réalisation consiste à assurer uniquement une hiérarchisation des blocs image 3, 3a, 3'. A ce propos, on observera que, du fait de l'association (voire de l'asservissement) des éléments 3, 4 entre eux (plus particulièrement d'un bloc image 3 et de son ou ses blocs texte 4 correspondant), toute action sur un tel bloc image 3 entraîne, d'une part, une modification de l'ordre hiérarchique des autres éléments et, d'autre part, une action sur le ou les blocs texte 4 correspondant à ce bloc image 3.

A titre d'exemple d'une telle hiérarchisation, il peut être considéré une fiche illustrant dix bouteilles, chacune de ces dix bouteilles étant caractérisée, d'une part, par un bloc image 3 au niveau duquel une telle bouteille est représentée et, d'autre part, par au moins un bloc texte 4, rattaché audit bloc image 3, et au niveau duquel est reportée une information relative à cette bouteille (par exemple, la provenance, le prix, le conditionnement...). Ladite hiérarchisation consiste, alors, à attribuer un ordre hiérarchique à chacune de ces bouteilles (notamment, à chacun des blocs image 3 correspondant à une telle bouteille, voire à chacun des éléments 3, 4 correspondant à une telle bouteille) en sorte que, lorsque l'on procède à la suppression d'une bouteille, par exemple la bouteille n° 8 (bloc image 3 et blocs texte 4 y relatifs), il se produit, automatiquement, une modification de la hiérarchie des anciennes bouteilles n° 9 et 10 (notamment des blocs image, voire encore des blocs texte relatifs à ces anciennes bouteilles) qui deviennent, respectivement, les nouvelles bouteilles n°8 et 9, ceci au travers de l'asservissement en hiérarchisation.

On observera qu'une fiche 2 est composée d'un ou plusieurs contenants 6, 6a, dont l'un 6 peut être constitué par une représentation (bloc image 3) d'au moins une bouteille éventuellement accompagnée d'au moins un commentaire (bloc texte 4) relatif à cette ou ces bouteilles tandis qu'un autre contenant 6a peut comporter des informations plus exhaustives (bloc texte 4a) relatives à cette ou ces bouteilles. Le présent procédé peut, alors, être conçu en sorte qu'en cas de suppression d'une bouteille au niveau d'un contenant 6, il se produit une suppression du bloc texte 4a correspondant à cette bouteille au niveau de l'autre contenant 6a ainsi qu'une nouvelle hiérarchisation des éléments contenus dans chacun de ces contenants 6, 6a.

Il convient d'observer que le procédé selon l'invention consiste, encore, lorsque l'on procède à un ajout d'une bouteille (bloc image 3 accompagné d'au moins un bloc texte 4), à attribuer, automatiquement, un ordre de hiérarchisation à cette nouvelle bouteille (plus particulièrement aux éléments correspondant) et consiste à assurer un asservissement de la hiérarchisation des autres bouteilles d'où résulte, éventuellement, un décalage de l'ordre de hiérarchisation de ces dernières.

De plus, ledit procédé peut également être conçu apte à permettre le déplacement d'une bouteille (notamment un bloc image 3 correspondant à cette bouteille) au sein d'un même contenant 6, ou d'un contenant 6 à un autre 6a, notamment d'une fiche 2 à une autre fiche 2'.

Le procédé peut, alors, consister à assurer un asservissement de la hiérarchisation des autres bouteilles (du ou des contenants 6, 6a) en assurant un décalage de l'ordre de hiérarchisation de ces dernières.

Cependant et selon un autre mode de réalisation, ledit procédé peut, encore, permettre d'interchanger deux bouteilles et/ou deux éléments (notamment relatifs à une même bouteille ou à deux bouteilles différentes) et consiste, alors également, à interchanger l'ordre de hiérarchisation de ces bouteilles et/ou de ces éléments.

Tel qu'évoqué ci-dessus, il est associé un identifiant à tout ou partie des éléments 3, 4 (voire encore à tout ou partie des contenants 6 et/ou des modèles 5 de fiche 2 et/ou des cadres 7) d'au moins une base de données. De plus on assure comme indiqué un lien entre les différents identifiants de ces éléments 3, 4 (voire de ces contenants 6 et/ou modèles 5 et/ou cadres 7).

C'est, plus particulièrement, par de tels liens que le ou les asservissements entre éléments et fiches et/ou la ou les hiérarchisations décrites ci-dessus sont rendus possibles.

Selon une autre caractéristique de l'invention, on assure une mémorisation, au niveau d'au moins une base de données 8, de tout ou partie desdits éléments 3, 4, voire encore de tout ou partie des contenants 6, modèles 5 et/ou cadres 7 de tout ou partie des fiches 2, 2' d'une maquette d'édition 1.

Le chargement de la base de données 8 par mémorisation de telles informations et données pourra, par exemple, être réalisé selon le procédé décrit dans la demande de brevet européen n° 1 285 356 ou dans la demande de brevet US n° 10/276 596.

De plus et selon un mode de réalisation préféré de l'invention, le procédé consiste en ce que l'on assure une mémorisation de tout ou partie des modifications et/ou de l'historique des modifications apportées à un tel élément (voire à un tel contenant, modèle et/ou cadre).

En outre, ledit procédé peut prévoir la mémorisation, au niveau d'une base de données, de tout ou partie des stades de l'évolution d'une fiche 2. En fait, une telle mémorisation peut être effectuée en procédant à la mémorisation de tout ou partie des modifications et/ou de l'historique des modifications apportées à un tel élément (voire à un tel contenant, modèle et/ou cadre).

En outre, il est prévu de ce fait une mémorisation, au niveau d'une base de données 8, d'une part, d'un identifiant tel que susmentionné et, d'autre part et en relation avec son identifiant, d'un tel élément (voire encore d'un tel contenant, modèle et/ou cadre).

Cependant et selon un mode de réalisation préféré de l'invention, on peut assurer encore une mémorisation, au niveau d'au moins une base de données, d'une part, d'un tel identifiant et, d'autre part et en relation avec cet identifiant, de tout ou partie des modifications et/ou de l'historique des modifications apportées à une fiche 2 et, plus particulièrement à un élément (voire au contenant, au modèle et/ou au cadre) auquel est associé cet identifiant, préférentiellement à chaque élément 3, 4 et/ou fiche 2.

Un tel mode de réalisation permet de mémoriser tout ou partie des stades de l'évolution d'une fiche 2 et autorise, d'une part, une consultation desdites modifications et/ou de l'historique de celles-ci et, d'autre part, un rappel d'une modification antérieure, notamment pour sa prise en compte dans la constitution d'une maquette 1, par exemple en lieu et place d'une modification ultérieure.

Encore une autre caractéristique de l'invention consiste en ce que l'on assure la visualisation, par l'intermédiaire de moyens appropriés, de toute modification et/ou correction apportées à une fiche 2.

A ce propos, on observera que de tels moyens de visualisation peuvent être constitués par un surlignage d'une partie au moins des modifications et/ou corrections qui ont été apportées à une fiche 2, notamment un surlignage d'une partie au moins d'un bloc image 3, d'un bloc texte 4, d'un contenant 6 ou autre ayant été modifié ou corrigé.

En fait, un mode de réalisation préféré de l'invention consiste à assurer un tel surlignage à l'aide de couleurs différentes, chacune de ces couleurs pouvant être caractéristique de l'origine (intervenant interne, externe...), de la nature (ajout, suppression...), ou autre d'une telle modification et/ou correction.

Ainsi, en assurant la visualisation, par exemple au niveau d'un écran, d'une fiche 2, il est, immédiatement, possible de percevoir si une modification/correction a été apportée à une telle fiche 2 et d'en déterminer l'origine, la nature ou autre.

Selon une autre caractéristique de l'invention, le procédé consiste en ce que l'on assure la mise en ligne, par l'intermédiaire d'un réseau intra (interne) et/ou extra-net (externe), et en temps réel d'au moins une fiche 2.

Une telle caractéristique permet, d'une part et au travers de la visualisation d'au moins une telle fiche 2, une consultation en temps réel de l'état d'avancement d'une telle fiche 2 ainsi que, éventuellement, de l'ensemble de la maquette d'édition 1. Un tel mode de réalisation permet d'assurer une supervision du processus de constitution d'une telle maquette 1, par une ou plusieurs personne(s) localisée(s) à des emplacements distants.

Une telle caractéristique permet, d'autre part, un accès à une telle fiche 2, notamment pour un opérateur en charge de travailler sur celle-ci.

Ceci permet, par exemple, à un concepteur de la maquette 1 d'apporter une modification et/ou une correction à au moins une fiche 2, à une personne en charge de la supervision du processus de constitution d'une maquette 1 de valider ou non une telle modification/correction, etc, ces personnes étant le cas échéant très éloignées les unes des autres.

Une autre possibilité consiste en ce qu'un fournisseur (notamment de bouteilles) peut, également, avoir accès à une telle fiche 2 ou à des éléments 3, 4 visualisés au niveau d'une telle fiche 2. Un tel accès peut permettre à un tel fournisseur d'apporter un complément d'information, une modification d'une information figurant, soit au niveau d'un élément 3, 4 visualisé au niveau d'une fiche 2, soit au niveau d'un paramètre de sélection susmentionné et associé à un tel élément (ristourne, quantité disponible...). Cet accès direct permet, avantageusement, d'éviter une erreur de transcription d'une telle information.

A ce propos, il convient d'observer que l'accès (pour la visualisation et/ou pour une quelconque intervention) à une telle maquette 1, à une telle fiche 2 ou à certains éléments 3, 4 ou à certains paramètres de sélection de ces éléments 3, 4 peut être réglementé par le procédé selon l'invention. En effet, ce procédé consiste, alors, en ce que l'on assure la mise en place de filtres autorisant ou non un accès à certains constituants (blocs image 3, texte 4, contenants 6 ou fiche 2) d'une maquette 1 ou à certaines informations liées à cette dernière 1 (paramètres de sélection), ceci en fonction de la nature de l'intervenant (chef de projet, maquettiste, fournisseur, client...)

De plus, on observera qu'une telle maquette d'édition 1 est, usuellement, exportée vers un logiciel de PAO ou de mise en page au niveau duquel cette maquette 1 peut subir un certain nombre de modifications qu'il convient, d'une part, de relire (notamment en vue ou non de leur validation) et, d'autre part, de reporter au niveau de cette maquette 1.

Aussi et selon une autre caractéristique de la présente invention, le procédé consiste en ce que, après ou pendant la constitution d'une telle maquette 1, le contenu d'au moins une fiche 2 est mis sous la forme d'un fichier, apte à être interprété par un logiciel de PAO ou de mise en page, et exporté vers ce dernier. Ce procédé consiste, de plus, en ce que, lorsqu'une modification est apportée audit fichier 12 au travers dudit logiciel de PAO installé sur un poste de travail 9, 15 correspondant, on reporte, de manière automatique, ladite modification au niveau du contenu de ladite au moins une fiche 2 correspondant audit fichier.

A ce propos, on remarquera que le contenu d'une telle fiche 2 est mis sous la forme d'un fichier 12 interprétable par un logiciel de PAO, ceci par l'intermédiaire de moyens de transformation, notamment de type logiciel.

En fait, un mode de réalisation préféré concerne le fait qu'une telle mise en forme consiste en ce qu'on associe à chaque constituant (bloc image 3, bloc texte 4, voire encore contenant 6, modèle 5 et/ou cadre 7, notamment mémorisé au niveau d'au moins une base de données) du contenu d'une telle fiche 2, au moins une balise apte à être reconnue par ledit logiciel de PAO.

Aussi, lorsqu'une modification sur un constituant est apportée au niveau du fichier de PAO, cette modification intervient entre deux balises et elle est reportée, de manière automatique (dans le cadre du procédé selon l'invention), au niveau du constituant, associé à au moins une de ces balises, et figurant au niveau d'au moins une base de données contenant les constituants des fiches 2 de la maquette 1.

Pour ce faire, le procédé peut, encore, consister en ce que l'on détecte, au niveau d'un fichier PAO modifié (notamment importé à partir d'un logiciel de PAO), au moins une modification apportée à un constituant associé à au moins une balise et en ce que l'on reporte, de manière automatique, cette modification au niveau du constituant mémorisé dans ladite base de données. Un tel mode de réalisation autorise la mise à jour (au niveau d'une base de données) uniquement des constituants modifiés par l'intermédiaire du logiciel de PAO, ceci sans écraser ou modifier (au niveau de la base de données) l'intégralité des constituants, correspondant au contenu d'au moins une fiche 2, et reportés au niveau d'un fichier PAO modifié (même si certains, voire la plupart, de ces constituants n'ont pas été modifiés).

De plus, on observera qu'une telle manière de procéder permet, avantageusement, de conserver les caractéristiques de la maquette d'édition 1, notamment en ce qui concerne les liens établis entre les différents éléments et/ou constituants, l'ordre de hiérarchisation, l'historique, le paramétrage, etc.

En variante, il peut aussi être prévu de mettre en oeuvre un transcodeur 13, autorisant une synchronisation sensiblement en temps réel entre le contenu de la base de données 8 et la représentation visuelle présente sur le moyen 9.

Selon une autre caractéristique, le procédé conforme à la présente invention est susceptible d'être géré par un logiciel apte à être mis en oeuvre par l'intermédiaire de moyens de traitement informatique, notamment constitués par un ordinateur ou analogue.

Le procédé pourra également comprendre des fonctionnalités additionnelles du type production automatique de nouveaux assemblages de blocs textes 4 et de blocs images 3 ; redimensionnements ou déplacements automatiques ou non de tels blocs en fonction d'ajouts, de suppressions ou de modifications ; remplacement, ajout ou suppression automatique de sigles ou de compléments informatifs (indication de promotions, nouveautés, cadeaux, remise, etc...) ou analogue.

La présente invention a également pour objet un système pour la mise en oeuvre du procédé décrit ci-dessus.

Un tel système est principalement constitué, comme le montre la figure 3 des dessins annexés, par une base de données 8 stockant les informations relatives à la structure, à l'arrangement et au contenu d'une maquette d'édition 1 dans des champs identifiés reliés entre eux par des liens correspondants, et par au moins un moyen de visualisation 9, 10 apte à afficher une représentation visuelle conforme à la réalité d'au moins une partie de ladite maquette d'édition composée d'au moins une fiche 2 au niveau de laquelle figure au moins un élément visuel 3, 4. Ce système est caractérisé en ce que ledit au moins un moyen de visualisation 9, 10 réalise un affichage dynamique et interactif autorisant une modification, par un intervenant ou utilisateur, de la représentation visuelle de la maquette 1 ou partie de maquette 1 et en ce qu'il comporte un asservissement entre ledit au moins un moyen de visualisation 9, 10 et la base de données 8 de telle manière que toute modification de la maquette 1 considérée intervenant au niveau de sa ou de l'une de ses représentation(s) visuelle(s) est automatiquement transposée au niveau de la base de données 8 et que toute modification de la maquette 1 considérée intervenant au niveau de la base de données 8 est automatiquement affichée au niveau de ladite au moins une représentation visuelle.

Le système comprendra bien entendu les moyens matériels et logiciels adéquats pour la mise en oeuvre des différentes opérations décrites ci-dessus en regard du procédé selon l'invention (unité de traitement, mémoire, interface de commande et de programmation, ...), et en particulier une interface de commande 15, 16 associée à chaque moyen de visualisation 9, 10 et une interface de commande et de programmation 14 associée à la base de données 8.

Le principal avantage de l'invention consiste en la réalisation d'un asservissement réciproque, et préférentiellement en temps réel (synchronisation), entre la base de données 8 stockant les informations d'une maquette 1 donnée et le ou les moyens de visualisation 9, 10 affichant une représentation de ladite maquette 1.

Un second avantage important de l'invention consiste en un asservissement entre eux de certains ou des différents éléments 3, 4 constituant les informations visuelles présentes sur les fiches 2 et/ou de certains contenant, cet ou ces asservissements pouvant se présenter sous différentes formes.

Des avantages additionnels de la présente invention consistent en ce que, d'une part, à partir d'éléments figurant dans une base de données et au travers de la sélection de ceux-ci, et, d'autre part, à partir d'un modèle de fiche de maquette, l'on assure la réalisation et l'édition d'une telle fiche en assurant la présence, au niveau de cette dernière, desdits éléments, ceci de manière automatisée.

Un autre avantage de la présente invention consiste en ce qu'il est défini, au niveau d'une fiche, des contenants recevant des éléments et en ce que ces éléments et/ou les contenants de ces éléments peuvent être asservis en taille et/ou en position, en sorte que lorsqu'on agit sur la taille d'un contenant auquel est asservi un élément de son contenu, il s'ensuit un asservissement en position et/ou en taille dudit élément d'un tel contenant.

Selon un autre avantage, il est défini une hiérarchie entre des éléments d'un ou plusieurs contenants et il est assuré un asservissement de hiérarchisation de ces éléments entre eux en sorte que lorsqu'on agit sur un tel élément il s'ensuit une modification de l'ordre hiérarchique des autres éléments.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Procédé pour la constitution d'une maquette d'édition composée d'au moins une fiche au niveau de laquelle figure au moins un élément visuel, les informations relatives à la structure, à l'arrangement et au contenu de ladite maquette étant stockées dans une base de données dans des champs identifiés reliés entre eux par des liens, ces informations comprenant des informations concernant les contenus desdits éléments visuels, stockées dans un premier ensemble de champs, et des informations concernant la forme, la disposition et la présentation desdits éléments visuels et la structure des fiches et de la maquette elle-même, stockées dans un second ensemble de champs, une représentation visuelle conforme à la réalité d'au moins une partie de ladite maquette d'édition pouvant être affichée par l'intermédiaire d'au moins un moyen de visualisation, procédé **caractérisé en ce qu'**il consiste à réaliser ledit au moins un affichage d'une représentation visuelle sous la forme d'un affichage dynamique et interactif autorisant une modification par un intervenant ou utilisateur de la représentation visuelle de la maquette (1) ou partie de maquette (1) et **en ce qu'**il consiste à réaliser un asservissement entre ledit au moins un moyen de visualisation (9, 10) et la base de données (8) de telle manière que toute modification de la maquette (1) considérée intervenant au niveau de sa ou de l'une de ses représentation(s) visuelle(s) est automatiquement transposée au niveau de la base de données (8) et que toute modification de la maquette (1) considérée intervenant au niveau de la base de données (8) est automatiquement affichée au niveau de ladite au moins une représentation visuelle.

2. Procédé selon la revendication 1, **caractérisé en ce que** la représentation visuelle d'une fiche (2), d'une partie de la maquette d'édition (1) ou de la totalité de cette dernière, est produite au niveau d'un moyen de visualisation (9) correspondant par exploitation d'un fichier (12) produit, et éventuellement rafraîchi à intervalles réguliers et/ou sur action d'un intervenant, à partir des informations correspondantes issues de la base de données (8) et apte à être interprétées par ledit moyen de visualisation (9) ou par transcodage (13) desdites informations, toute modification de ladite représentation visuelle étant répercutée automatiquement dans ledit fichier (12), puis dans ladite base de données (8), ou directement dans cette dernière par l'intermédiaire d'un transcodeur (13), sensiblement en temps réel ou de manière différée.

3. Procédé selon la revendication 1, **caractérisé en ce que** la représentation visuelle d'une ou de plusieurs fiches (2), de la maquette d'édition (1) ou de la totalité de cette dernière, est produite au niveau d'au moins un moyen de visualisation (10) associé à la base de données (8) et exploitant en vue de cet affichage directement les informations correspondantes issues de ladite base de données (8), toute modification de ladite représentation visuelle étant répercutée automatiquement et en temps réel en tant que modification correspondante des informations concernées stockées au niveau de la base de données (8), et vice-versa.

4. Procédé selon les revendications 2 et 3, **caractérisé en ce qu'**il consiste à afficher une même représentation visuelle sur au moins deux moyens de visualisation (10) sous forme d'interfaces graphiques, reliés entre eux et à la base de données (8) par un réseau adapté et associé chacun à une interface de commande (16) susceptible de permettre de modifier la représentation visuelle, l'affichage de ladite représentation visuelle étant éventuellement tronqué sur certains des moyens de visualisation (10) et les possibilités de modifications étant éventuellement limitées ou absentes au niveau d'une ou de plusieurs interface(s) de commande (16), en fonction de la qualité de l'utilisateur concerné et des autorisations affectées à ce dernier.

5. Procédé selon les revendications 2 à 4, **caractérisé en ce qu'**il consiste à afficher une même représentation visuelle sur au moins deux moyens de visualisation (9 et 10) différents, dont au moins l'un (9) interprète un fichier (12) produit à partir d'informations issues de la base de données (8) ou est relié à un transcodeur (13) adapté associé ou intégré dans ladite base et dont au moins un autre (10), sous la forme d'une interface graphique, exploite directement lesdites informations issues de la base de données (8), une modification de ladite représentation visuelle intervenant sur l'un des moyens de visualisation (9, 10) étant automatiquement, et sensiblement en temps réel, répercutée au niveau de l'autre ou des autres moyen(s) de visualisation (10, 9).

6. Procédé selon l'une quelconque des revendications 1 à 5, **caractérisé en ce qu'**il consiste, pour une maquette d'édition (1) donnée, à réaliser un asservissement de nature relationnelle, structurelle, spatiale et/ou dimensionnelle, entre au moins deux éléments (3, 3a, 4, 4a ; 3', 4') d'une même fiche (2) ou d'au moins deux fiches (2, 2') différentes de cette maquette (1), ledit asservissement étant préférentiellement soumis à des règles prédéfinies et à la prise en compte de critères graphiques.

7. Procédé selon la revendication 6, **caractérisé en ce qu'**il consiste à assurer un asservissement en temps réel et réciproque entre tous les éléments (3, 4, 3a, 4a, 3', 4') de toutes les fiches (2, 2') constituant la maquette d'édition (1).

8. Procédé selon l'une quelconque des revendications 1 à 7, **caractérisé en ce qu'**il consiste à définir au niveau de chaque fiche (2, 2') au moins un contenant (6, 6a, 6') dans lequel est contenu un élément (3, 4, 3a, 4a ; 3', 4') ou un groupe d'éléments (3, 4, 3a, 4a ; 3', 4'), les contenants (6, 6a ; 6') d'une même fiche (2, 2') ou d'au moins deux fiches (2 et 2') différentes étant asservis entre eux.

9. Procédé selon l'une quelconque des revendications 1 à 8, **caractérisé en ce qu'**il consiste, en vue d'une première constitution d'une maquette d'édition (1) donnée, à réaliser les opérations suivantes :
a) affecter à tout ou partie des éléments (3, 3a, 4, 4a ;3', 4') de la base de données (8) des paramètres permettant d'en assurer une sélection automatique et/ou manuelle.
b) sélectionner, dans la base de données (8), par l'intermédiaire de moyens automatiques et/ou manuels, des éléments (3, 3a, 4, 4a ; 3', 4') destinés à entrer dans la composition d'une fiche (2, 2') de la maquette (1) ;
c) sélectionner et/ou définir un modèle (5) correspondant à ladite fiche (2, 2') ;
d) sélectionner l'ordre d'implantation et les localisations desdits éléments (3, 3a, 4, 4a ; 3', 4') sur ladite fiche (2) ;
e) répéter les opérations b) à d) pour chaque fiche (2, 2')
f) assurer une édition d'au moins une fiche (2, 2'), d'une partie de la maquette (1) ou de la maquette (1) entière sur un moyen de visualisation (9, 10) ou autre.

10. Procédé selon l'une quelconque des revendications 1 à 9, **caractérisé en ce que** les champs comprenant, pour une maquette d'édition (1) donnée, les informations de paramétrage de la disposition, la présentation, l'arrangement et la structure des éléments visuels (3, 4, 3a, 4a ; 3', 4'), des fiches (2, 2') et de ladite maquette (1) sont adaptés pour être programmés et modifiés par une interface de commande et de programmation adéquate (14) associée à la base de données (8), lesdits champs étant structurés hiérarchiquement en champs de paramétrage respectivement de la maquette d'édition (1) dans son ensemble, de chaque fiche (2, 2'), du ou des groupes d'éléments (3, 4, 3a, 4a ; 3', 4') de chaque fiche (2, 2'), du ou des éléments de chaque groupe et de la présentation du contenu de chaque élément (3, 4, 3a, 4a ; 3', 4').

11. Procédé selon l'une quelconque des revendications précédentes, **caractérisé par le fait que** l'on associe à une fiche (2) donnée au moins un contenant (6, 6a) ainsi qu'au moins un élément (3, 4) contenu dans un tel contenant (6, 6a) et qu'il est assuré un asservissement en position et/ou en taille du ou des éléments (3, 4) d'au moins un contenant (6) ou premier contenant (6) à un ou plusieurs autres éléments (4, 3) de ce contenant (6) ou d'au moins un autre contenant (6a), ledit éventuel au moins un autre contenant (6a) appartenant à la même fiche (2) que ledit premier contenant (6) ou à une autre fiche (2').

12. Procédé selon l'une quelconque des revendications précédentes, **caractérisé en ce qu'**il consiste à associer à au moins une fiche (2) au moins un contenant (6, 6a) ainsi qu'au moins un élément (3, 4 ; 3a, 4a) contenu dans un tel contenant (6 ; 6a) et à assurer un asservissement du contenu de tout ou partie des éléments (3, 4) d'au moins un contenant (6) au contenu de tout ou partie des autres éléments (4, 3 ; 3a, 4a) de ce contenant (6) ou d'au moins un autre contenant (6a).

13. Procédé selon l'une quelconque des revendications 8 et 9, **caractérisé en ce qu'**il consiste à fournir une possibilité de sélection de l'asservissement, soit du contenu, soit en taille et/ou en position, d'au moins un élément (3, 4) contenu dans au moins un contenant (6) par rapport à au moins un autre élément (4, 3) et/ou par rapport à au moins un contenant (6).

14. Procédé selon l'une quelconque des revendications précédentes, **caractérisé en ce qu'**il consiste à définir une hiérarchie entre tous les ou partie des éléments (3, 4) d'un ou plusieurs contenants (6) d'une ou plusieurs fiches (2) et à assurer un asservissement de hiérarchisation de tous ou partie de ces éléments (3, 4) entre eux de telle manière qu'une action sur un élément (3, 4) donné il en découle automatiquement une modification de l'ordre hiérarchique des autres éléments (4, 3).

15. Procédé selon l'une quelconque des revendications précédentes, **caractérisé en ce qu'**il consiste à assurer une mémorisation, au niveau de la base de données (8), d'une part, de chacun des identifiants associés aux éléments (3, 4) et, d'autre part, de tout ou partie des modifications et/ou de l'historique des modifications apportées à chaque élément (3, 4) et/ou à chaque fiche (2), ceci en association avec un tel identifiant.

16. Procédé selon l'une quelconque des revendications précédentes, **caractérisé par le fait qu'**il consiste à fournir des filtres contrôlant de manière discriminatoire l'accès à certains constituants de la maquette (1) et/ou à certaines informations liées à cette dernière (1), ceci en fonction de la qualité ou des autorisations de l'intervenant.

17. Procédé selon l'une quelconque des revendications précédentes, **caractérisé par le fait que**, après ou pendant la constitution d'une maquette (1), le contenu d'au moins une fiche (2) est mis sous la forme d'un fichier (12), apte à être interprété par un logiciel de PAO ou de mise en page, et exporté vers ce dernier et que, lorsqu'une modification est apportée audit fichier au travers dudit logiciel de PAO ou de mise en page, ladite modification est reportée, de manière automatique, au niveau du contenu de ladite au moins une fiche (2) correspondant audit fichier (12).

18. Système pour la mise en oeuvre du procédé selon l'une quelconque des revendications 1 à 17, principalement constitué par une base de données (8) stockant les informations relatives à la structure, à l'arrangement et au contenu d'une maquette d'édition (1) dans des champs identifiés reliés entre eux par des liens correspondants, et par au moins un moyen de visualisation (9, 10) apte à afficher une représentation visuelle conforme à la réalité d'au moins une partie de ladite maquette d'édition (1), composée d'au moins une fiche (2) au niveau de laquelle figure au moins un élément visuel (3, 4), système **caractérisé en ce que** ledit au moins un moyen de visualisation (9, 10) réalise un affichage dynamique et interactif autorisant une modification, par un intervenant ou utilisateur, de la représentation visuelle de la maquette (1) ou partie de maquette (1) et **en ce qu'**il comporte un asservissement entre ledit au moins un moyen de visualisation (9, 10) et la base de données (8) de telle manière que toute modification de la maquette (1) considérée intervenant au niveau de sa ou de l'une de ses représentation(s) visuelle(s) est automatiquement transposée au niveau de la base de données (8) et que toute modification de la maquette (1) considérée intervenant au niveau de la base de données (8) est automatiquement affichée au niveau de ladite au moins une représentation visuelle.

19. Système selon la revendication 18, **caractérisé en ce qu'**il comprend en outre des moyens pour la mise en oeuvre des opérations selon l'une quelconque des revendications 1 à 17, en particulier une interface de commande (15, 16) associée à chaque moyen de visualisation (9, 10) et une interface de commande et de programmation (14) associée à la base de données (8).
